(19) Europäisches Patentamt
European Patent Office
Office européen des brevets

(11) **EP 4 560 603 A1**

(12) **EUROPEAN PATENT APPLICATION**
published in accordance with Art. 153(4) EPC

(43) Date of publication:
**28.05.2025 Bulletin 2025/22**

(21) Application number: **22952022.6**

(22) Date of filing: **22.07.2022**

(51) International Patent Classification (IPC):
**G08G 1/16** (2006.01) **G01C 21/34** (2006.01)

(52) Cooperative Patent Classification (CPC):
**G01C 21/34; G08G 1/16**

(86) International application number:
**PCT/JP2022/028530**

(87) International publication number:
**WO 2024/018638 (25.01.2024 Gazette 2024/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **KAWASAKI JUKOGYO KABUSHIKI
KAISHA**
**Kobe-shi, Hyogo 650-8670 (JP)**

(72) Inventors:
• **OTSUKI Satoshi**
  **Kobe-Shi, Hyogo 650-8670 (JP)**
• **NAKASHIMA Kenichi**
  **Kobe-Shi, Hyogo 650-8670 (JP)**

(74) Representative: **Arnold & Siedsma**
**Bezuidenhoutseweg 57**
**2594 AC The Hague (NL)**

(54) **MAP GENERATING DEVICE AND DRIVING ASSISTANCE SYSTEM**

(57)     A map generator 100 includes: a collector 65 that collects monitoring information in an environment; and a creator 67 that generates a map 2 for assisting autonomous driving of a mover 1 based on the monitoring information. The creator 67 obtains a hazardous area 3 that is included in the environment and to be avoided based on the monitoring information. The creator 67 generates the map 2 including geographical information 21 and the hazardous area 3.

FIG. 2

EP 4 560 603 A1

**Description**

FIELD

The technique disclosed here relates to a map generator and a driving assistance system.

BACKGROUND

Patent Document 1, for example, discloses a self-driving support system. In this self-driving support system, vehicles share common road map data. Each vehicle calculates a relative position with respect to a reference point in the road map data and outputs the relative position to other vehicles. Each vehicle compares the reference point in the road map data with relative positions of other vehicles to determine positions of the other vehicles. Based on the obtained positions of the other vehicles, each vehicle performs autonomous driving to avoid collision with the other vehicles.

CITATION LIST

PATENT DOCUMENT

Patent Document 1: Japanese Patent Application Publication No. 2019-132988

SUMMARY

In the system described above, vehicles generate routes in autonomous driving. In this generation, each vehicle determines a possibility of collision with other vehicles based on relative position information with respect to the other vehicles. This increases a processing load such as a calculation load in generating a route by the vehicle.
It is therefore an object of the technique disclosed here to reduce a processing load such as a calculation load in generating a route.
A map generator according to the present disclosure includes: a collector that collects monitoring information in an environment; and a creator that generates a map for assisting autonomous driving of a mover based on the monitoring information, wherein the creator obtains a hazardous area that is included in the environment and to be avoided, based on the monitoring information, and generates the map including geographical information and the hazardous area.
A driving assistance system according to the present disclosure includes: a mover that performs autonomous driving; and a map generator that generates a map for assisting autonomous driving of the mover, wherein the map generator includes a collector that collects monitoring information in an environment, and a creator that generates the map based on the monitoring information, the creator obtains a hazardous area that is included in the environment and to be avoided based on the monitoring information, generates the map including geographical information and the hazardous area, and transmits the map to the mover, and the mover generates a route of autonomous driving based on the geographical information and the hazardous area.
A "map" herein is not limited to an expression as an actual diagram, and is a concept also including data formats. That is, the "map" can be regarded as "map information" or "map data."
The map generator can reduce a processing load such as a calculation load in generating a route.
The driving assistance system can reduce a processing load such as a calculation load in generating a route.

BRIEF DESCRIPTION OF THE DRAWINGS

[FIG. 1] FIG. 1 is a schematic view of a driving assistance system.
[FIG. 2] FIG. 2 illustrates a configuration of a map.
[FIG. 3] FIG. 3 illustrates a schematic hardware configuration of a first monitor.
[FIG. 4] FIG. 4 is a functional block diagram of a processor of the first monitor.
[FIG. 5] FIG. 5 illustrates a schematic hardware configuration of a second monitor.
[FIG. 6] FIG. 6 is a functional block diagram of a processor of the second monitor.
[FIG. 7] FIG. 7 illustrates a schematic hardware configuration of a mover.
[FIG. 8] FIG. 8 is a functional block diagram of a processor of the mover.
[FIG. 9] FIG. 9 illustrates a schematic hardware configuration of a map generator.
[FIG. 10] FIG. 10 is a functional block diagram of a processor of the map generator.
[FIG. 11] FIG. 11 is a schematic view showing an example of geographical information.

[FIG. 12] FIG. 12 is a schematic view showing an example of first hazardous area information.

[FIG. 13] FIG. 13 is a schematic view showing an example of second hazardous area information.

[FIG. 14] FIG. 14 is a schematic view showing an example of obstacle information.

[FIG. 15] FIG. 15 is a schematic view showing an example of disturbance information.

[FIG. 16] FIG. 16 is a schematic view showing an example of search information.

[FIG. 17] FIG. 17 is a graph showing a monitoring priority change.

[FIG. 18] FIG. 18 is a flowchart of a monitoring process.

[FIG. 19] FIG. 19 is a flowchart of autonomous driving.

[FIG. 20] FIG. 20 is a schematic view of a map in which first hazardous area information is superimposed on geographical information.

[FIG. 21] FIG. 21 is a schematic view of a map in which first hazardous area information and second hazardous area information are superimposed on geographical information.

[FIG. 22] FIG. 22 is a schematic view of a map in which a behavior of an obstacle predicted based on obstacle information is superimposed on geographical information.

DESCRIPTION OF EMBODIMENTS

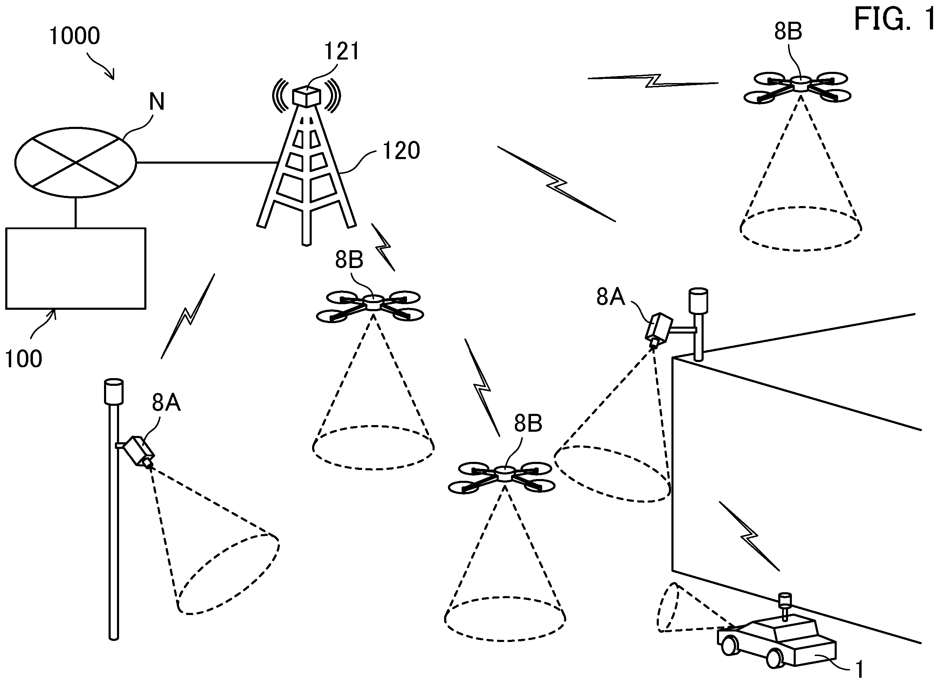

An exemplary embodiment will be described in detail hereinafter with reference to the drawings. FIG. 1 is a schematic view of a driving assistance system 1000. The driving assistance system 1000 includes a mover 1 that performs autonomous driving, a monitor 8 that acquires monitoring information in an environment, and a map generator 100 that generates a map 2 for assisting autonomous driving. The driving assistance system 1000 may include movers 1. The map generator 100 is communicably connected to the mover 1 and the monitor 8. The map generator 100 transmits and receives various types of information to/from the mover 1 and the monitor 8. The map generator 100 generates the map 2 for assisting driving of the mover 1 based on monitoring information acquired by the monitor 8, and transmits the generated map 2 to the mover 1. The mover 1 generates a route based on the map 2 and performs autonomous driving. The map generator 100 generates the map 2 for assisting acquisition of monitoring information by the monitor 8, and transmits the generated map 2 to the monitor 8. The monitor 8 acquires monitoring information based on the map 2 and transmits the acquired monitoring information to the map generator 100. Communication of the map generator 100 with the mover 1 and the monitor 8 is performed through a relay 121. The map generator 100 is connected to the relay 121 through a communication network N such as the Internet. The relay 121 performs wireless communication to the mover 1 and the monitor 8.

-Map-

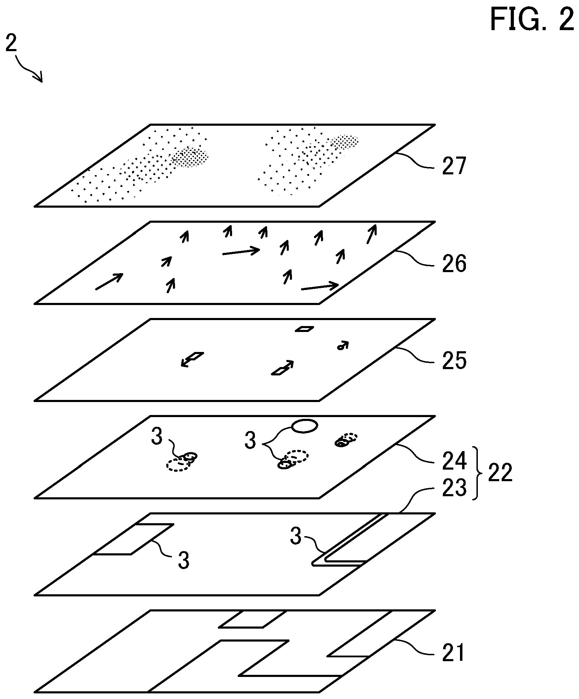

First, a map generated by the map generator 100 will be described. FIG. 2 illustrates a configuration of the map 2.

The map 2 includes geographical information 21 and hazardous areas 3. Specifically, the map 2 includes the geographical information 21 and hazardous area information 22. The hazardous area information 22 is information on the hazardous areas 3 that are included in an environment and should be avoided. The map 2 may further include obstacle information 25 and disturbance information 26. The obstacle information 25 is information on motion of obstacles. The disturbance information 26 is information on disturbance of autonomous driving of the mover 1. The map 2 for use in acquiring monitoring information includes search information 27. The search information 27 is information on a monitoring priority at each position in the environment.

The geographical information 21 includes at least one of roads, passages, or planimetric features (objects located on land or at sea, whether natural or artificial, such as buildings, trees, and rocks). The geographical information 21 is information on general maps such as road maps, facility maps, and fairway maps. The geographical information 21 may be static information. Although the geographical information 21 can change because of factors such as road alterations, building demolition, or rock erosion, the geographical information 21 is basically permanent information. The geographical information 21 has a coordinate system common to each of the hazardous area information 22, the obstacle information 25, the disturbance information 26, and the search information 27. That is, positions in each of the hazardous area information 22, the obstacle information 25, the disturbance information 26, and the search information 27 correspond to positions on the geographical information 21.

The hazardous area information 22 is information on positions and outer shapes of the hazardous areas 3 that are included in an environment and should be avoided. The hazardous area information 22 includes at least one of the first hazardous area information 23 or the second hazardous area information 24.

The first hazardous area information 23 is information on positions and outer shapes of hazardous areas 3 corresponding to static obstacles among obstacles included in the environment. The hazardous areas 3 corresponding to static obstacles will be referred to as "first hazardous areas 31." The static obstacles are obstacles that hardly move. The static obstacles may include temporary or time-limited structures, facilities, and planimetric features. Examples of the static obstacles may include construction sites, accident sites, rough terrain, shallow waters, aquaculture farms, dark areas, fog, and localized heavy rainfall. Since obstacles as targets are static in the first hazardous area information 23, the positions of the first hazardous areas 31 are substantially the same as those of the obstacles, and the outer shapes of the first hazardous areas 31 are substantially the same as those of the obstacles and enclose the obstacles. The static obstacles can also include areas that are legally or customarily impassable.

The second hazardous area information 24 is information on positions and outer shapes of hazardous areas 3 corresponding to dynamic obstacles among obstacles included in the environment. The hazardous areas 3 corresponding to dynamic obstacles will be referred to as "second hazardous areas 32." The dynamic obstacles are obstacles that can move. For example, objects that are inherently mobile but temporarily stationary, such as a parked vehicle, are considered dynamic obstacles. Examples of the dynamic obstacles may include people, animals, swarms of insects, vehicles, traffic congestion, ships, and drifting objects. Since obstacles as targets are dynamic in the second hazardous area information 24, the positions of the second hazardous areas 32 are positions shifted from the positions of the obstacles in the movement direction of the obstacles, and the outer shapes of the second hazardous areas 32 are predictable from the movement direction and movement amount of the obstacles.

When the first hazardous areas 31 and the second hazardous areas 32 are not distinguished from each other, the regions are simply referred to as "hazardous areas 3."

The obstacle information 25 is information on positions and movement of dynamic obstacles among obstacles included in the environment. The obstacle information 25 is information as a basis of the second hazardous area information 24. The second hazardous areas 32 of the second hazardous area information 22B are generated from obstacles included in the obstacle information 25. The obstacle information 25 is used for autonomous driving of the mover 1.

The disturbance information 26 is information on disturbance in the environment. That is, the disturbance information 26 is information on disturbance to the mover 1 passing in the environment. Examples of the disturbance include wind and tidal current.

The search information 27 is information on monitoring priorities at each position in the environment. For example, the monitoring priority corresponds to an elapsed time since monitoring information was acquired. The monitoring priority at a position increases with the elapsed time since monitoring information at the position was acquired. The monitoring priority is low immediately after the monitoring information is acquired. As the time passes after the monitoring information is acquired, the monitoring priority increases.

The map 2 is obtained by associating at least one of the hazardous area information 22, the obstacle information 25, the disturbance information 26, or the search information 27 with the geographical information 21. In this example, the map 2 include the geographical information 21, the first hazardous area information 23, the second hazardous area information 24, the obstacle information 25, the disturbance information 26, and the search information 27 as different layers. Positions of the first hazardous area information 23, the second hazardous area information 24, the obstacle information 25, the disturbance information 26, and the search information 27 correspond to positions on the geographical information 21.

-Monitor-

The monitor 8 includes fixed first monitors 8A and mobile second monitors 8B. When the first monitors 8A are not distinguished from the second monitors 8B, these monitors are simply referred to as "monitors 8." In the drawings, the first monitors 8A are distinguished from the second monitors 8B. Each monitor includes a monitoring sensor that acquires monitoring information in a predetermined range. The monitoring information can include geographic features, buildings, planimetric features, facilities, movers, airflow directions, tidal current, and so forth. The monitoring sensor includes at least one of a camera, light detection and ranging (LiDAR) sensor, an infrared sensor, a laser range finder, a Doppler LiDAR sensor, or an anemometer. For example, the camera takes a static image or a moving image. The laser range finder may employ a green laser.

The first monitors 8A are fixed in the environment. The environment refers to a surrounding environment in which the mover 1 can move. Each of the first monitors 8A is installed on, for example, a building, a street light, or a utility pole. Alternatively, the first monitor 8A is installed on a dedicated structure. The monitor range of the first monitor 8A may be fixed or changeable. In this example, the first monitor 8A is fixed in the environment, and the orientation of the first monitor 8A is changeable by 360 degrees. That is, the first monitor 8A can change the monitoring range thereof with time to obtain monitoring information for 360 degrees around the monitor 8A.

The second monitors 8B are movers such as flying devices and vehicles. In this example, the second monitors 8B are drones as flying devices. Each of the second monitors 8B includes the monitoring sensor described above and flies freely in the environment to acquire monitoring information on any area in the environment. The second monitor 8B is an example of a mobile monitor.

The monitor 8 communicates with the map generator 100 through the relay 121. The relay 121 is installed on, for example, a control tower 120. The relay 121 is communicably connected to the map generator 100 through the communication network N.

-First Monitor-

The first monitor 8A continuously acquires monitoring information and periodically transmits the acquired monitoring information to the map generator 100. The first monitor 8A periodically receives the map 2 from the map generator 100, determines a monitoring area based on the map 2, and acquires monitoring information on the determined monitoring area.

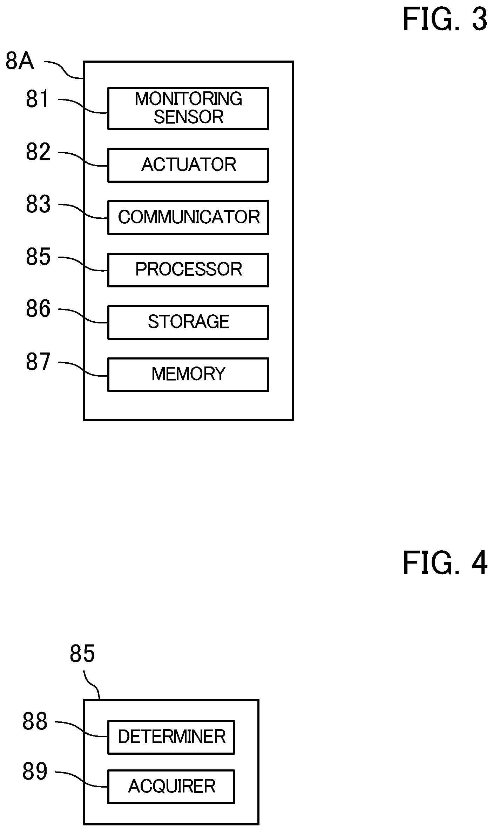

FIG. 3 illustrates a schematic hardware configuration of the first monitor 8A. The first monitor 8A includes a monitoring sensor 81, an actuator 82, a communicator 83, a processor 85, a storage 86, and a memory 87. The monitoring sensor 81 is at least one of the camera and other devices described above. In this example, the monitoring sensor 81 is a camera and a LiDAR sensor. The monitoring sensor 81 acquires images and point group data of objects in a predetermined monitoring area as monitoring information. The actuator 82 changes orientation of the monitoring sensor 81 to thereby change a monitoring area of the monitoring sensor 81. The actuator 82 is, for example, an electric motor. The communicator 83 wirelessly communicates with an external device.

The processor 85 controls the entire first monitor 8A. The processor 85 performs various computation processes. For example, the processor 85 is a processor such as a central processing unit (CPU). The processor 85 may be a micro controller unit (MCU), a micro processor unit (MPU), a field programmable gate array (FPGA), a programmable logic controller (PLC), or system LSI, for example.

The storage 86 stores programs and various types of data to be executed by the processor 85. For example, the storage 86 stores a control program. The storage 86 stores position information on the first monitor 8A. The storage 86 may be, for example, a nonvolatile memory, a hard disc drive (HDD), or a solid state drive (SSD). The memory 87 temporarily stores data or other information. For example, the memory 87 is a volatile memory.

FIG. 4 is a functional block diagram of the processor 85. The processor 85 reads programs from the storage 86 and develops the programs to the memory 87 to thereby perform various functions. Specifically, the processor 85 serves as a determiner 88 that determines a monitoring area of the monitoring sensor 81 and an acquirer 89 that acquires monitoring information by the monitoring sensor 81.

The determiner 88 determines a monitoring area of the monitoring sensor 81 based on a search instruction from the map generator 100 and the map 2. A method for determining the monitoring area will be described later.

The acquirer 89 causes the monitoring sensor 81 to acquire monitoring information on the monitoring area determined by the determiner 88. Specifically, the acquirer 89 operates the actuator 82 to adjust the monitoring area of the monitoring sensor 81 and acquires monitoring information by the monitoring sensor 81. The acquirer 89 stores the acquired monitoring information, time information at acquisition, and position information on the monitoring area, in the storage 86. The acquirer 89 transmits the monitoring information, the time information, and the position information stored in the storage 86 to the map generator 100.

-Second Monitor-

The second monitor 8B continuously acquires monitoring information while moving in the environment, and periodically transmits the acquired monitoring information to the map generator 100. The second monitor 8B periodically receives the map 2 from the map generator 100, determines a monitoring area based on the map 2, and acquires monitoring information on the determined monitoring area.

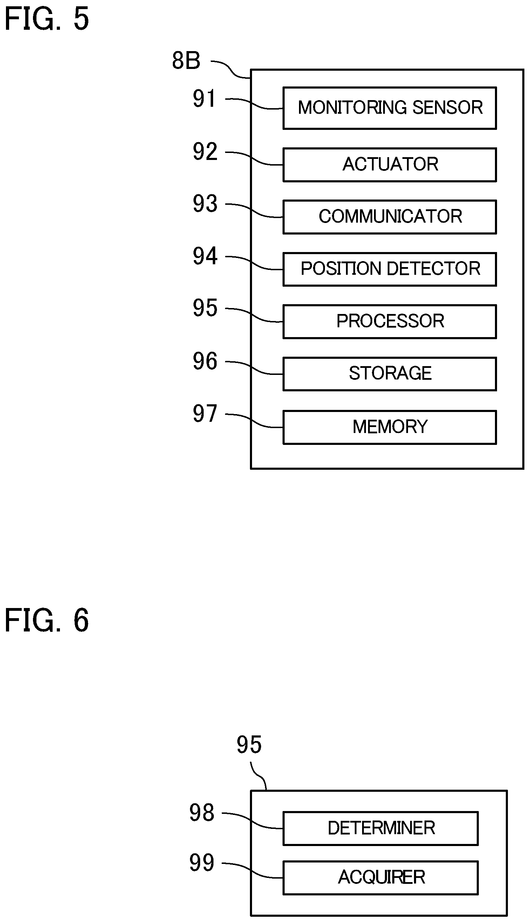

FIG. 5 illustrates a schematic hardware configuration of the second monitor 8B. The second monitor 8B includes a monitoring sensor 91, an actuator 92, a communicator 93, a position detector 94, a processor 95, a storage 96, and a memory 97. The monitoring sensor 91 is at least one of the camera and other devices described above. In this example, the monitoring sensor 91 is a LiDAR sensor or a camera. The monitoring sensor 91 acquires point group data and still images of objects in a predetermined monitoring area as monitoring information. The actuator 92 moves the monitoring sensor 91 to thereby change a monitoring area of the monitoring sensor 91. The actuator 92 is, for example, an electric motor of a plurality of (e.g., four) propellers of a drone. The actuator 92 adjusts driving of the propellers to thereby cause the second monitor 8B to fly and change the monitoring area of the monitoring sensor 91. The communicator 93 wirelessly communicates with an external device. The position detector 94 detects a position of a second monitoring facility 9B. For example, the position detector 94 is a global positioning system (GPS) receiver. The position detector 94 may include a gyro sensor or an acceleration sensor.

The processor 95 controls the entire second monitor 8B. The processor 95 performs various computation processes. For example, the processor 95 is a processor such as a central processing unit (CPU). The processor 95 may be a micro controller unit (MCU), a micro processor unit (MPU), a field programmable gate array (FPGA), a programmable logic controller (PLC), or system LSI, for example.

The storage 96 stores programs and various types of data to be executed by the processor 95. For example, the storage 96 stores a control program. The storage 96 may be, for example, a nonvolatile memory, a hard disc drive (HDD), or a solid state drive (SSD). The memory 97 temporarily stores data or other information. For example, the memory 97 is a volatile memory.

FIG. 6 is a functional block diagram of the processor 95. The processor 95 reads programs from the storage 96 and develops the programs to the memory 97 to thereby perform various functions. Specifically, the processor 95 serves as a determiner 98 that determines a monitoring area of the monitoring sensor 91 and an acquirer 99 that acquires monitoring information by the monitoring sensor 91.

The determiner 98 determines a monitoring area of the monitoring sensor 91 based on a search instruction and the map 2 from the map generator 100. A method for determining the monitoring area will be described later.

The acquirer 99 causes the monitoring sensor 91 to acquire monitoring information on the monitoring area determined by the determiner 98. Specifically, the acquirer 99 controls the actuator 92 to thereby move the second monitoring facility 9B so that the monitoring area of the monitoring sensor 91 matches the determined monitoring area. The acquirer 99 acquires monitoring information on the monitoring area by the monitoring sensor 91. The acquirer 99 stores the acquired monitoring information, time information at acquisition, and position information on the monitoring area, in the storage 96. The position of the monitoring area is a position of the second monitoring facility 9B detected by the position detector 94. The acquirer 99 transmits the monitoring information, the time information, and the position information stored in the storage 96 to the map generator 100.

-Mover-

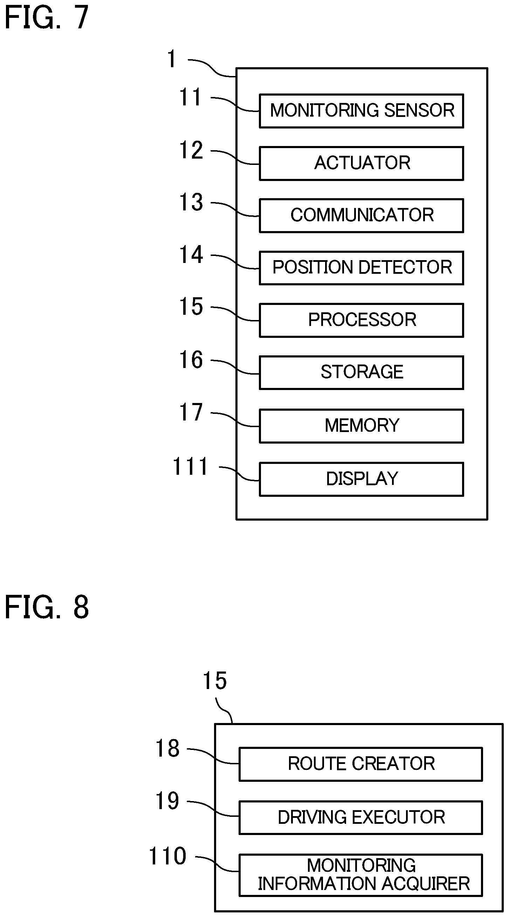

The mover 1 is, for example, a vehicle. Alternatively, the mover 1 may be a ship or an autonomous robot. FIG. 7 illustrates a schematic hardware configuration of the mover 1. The mover 1 includes a monitoring sensor 11, an actuator 12, a communicator 13, a position detector 14, a display 111, a processor 15, a storage 16, and a memory 17. The monitoring sensor 11 is at least one of the camera and other devices described above. In this example, the monitoring sensor 11 is a LiDAR sensor. The monitoring sensor 11 acquires point group data of objects in a predetermined monitoring area as monitoring information. The actuator 12 is a driving source of the mover 1. For example, the actuator 12 is an electric motor or an engine. The communicator 13 wirelessly communicates with an external device. The position detector 14 detects a position of the mover 1. For example, the position detector 14 is a global positioning system (GPS) receiver. The position detector 14 may include a gyro sensor or an acceleration sensor. In a case where the mover 1 is a vehicle, the display 111 is, for example, a car navigation system. The display 111 displays the map 2 as necessary.

The processor 15 controls the entire mover 1. The processor 15 performs various computation processes. For example, the processor 15 is a processor such as a central processing unit (CPU). The processor 15 may be a micro controller unit (MCU), a micro processor unit (MPU), a field programmable gate array (FPGA), a programmable logic controller (PLC), or system LSI, for example.

The storage 16 stores programs and various types of data to be executed by the processor 15. For example, the storage 16 stores a control program. The storage 16 stores position information on the mover 1. The storage 16 may be, for example, a nonvolatile memory, a hard disc drive (HDD), or a solid state drive (SSD).

The memory 17 temporarily stores data or other information. For example, the memory 17 is a volatile memory.

The processor 15 controls the actuator 12 so that the mover 1 thereby performs autonomous driving. The mover 1 receives the map 2 from the map generator 100 through the communicator 13, and generates a route based on the map 2. The processor 15 controls the actuator 12 based on detection results by the monitoring sensor 11 and the position detector 14 to cause the mover 1 to move along the generated route. The mover 1 periodically receives the map 2 from the map generator 100 and updates the route.

FIG. 8 is a functional block diagram of the processor 15. The processor 15 reads programs from the storage 16 and develops the programs to the memory 17 to thereby perform various functions. Specifically, the processor 15 serves as a route creator 18, a driving executor 19, and a monitoring information acquirer 110.

The route creator 18 generates a route based on the map 2. A destination is set in the mover 1 beforehand. The route creator 18 generates a route from a current position of the mover 1 to the destination based on the map 2. At this time, the route creator 18 refers to the geographical information 21 and the hazardous area information 22 included in the map 2. The route creator 18 causes the display 111 to display the map 2. For example, the route creator 18 superimposes the hazardous area information 22 on the geographical information 21 and causes the display 111 to display the resulting information. The route creator 18 may superimpose the route on the map 2 and cause the display 111 to display the map 2.

The driving executor 19 controls the actuator 12 such that the mover 1 moves along the generated route. The driving executor 19 controls the actuator 12 such that the position of the mover 1 detected by the position detector 14 moves on the generated route. In a case where an obstacle for which collision is to be avoided is determined to be present based on the map 2, the executor 19 controls the actuator 12 to perform avoidance driving of avoiding collision with the obstacle.

The monitoring information acquirer 110 acquires monitoring information by the monitoring sensor 11. The monitoring information acquirer 110 stores the acquired monitoring information, time information at acquisition, and position information on the monitoring area in the storage 16. The position of the monitoring area is a position of the mover 1 detected by the position detector 14. The monitoring information acquirer 110 transmits the monitoring information, the time information, and the position information stored in the storage 16 to the map generator 100.

-Map Generator-

The map generator 100 periodically collects monitoring information from the monitors 8. The map generator 100 integrates and processes the monitoring information from the monitors 8 and generates the map 2. The map generator 100 periodically generates the map 2 and transmits the map 2 to the mover 1 or the monitors 8.

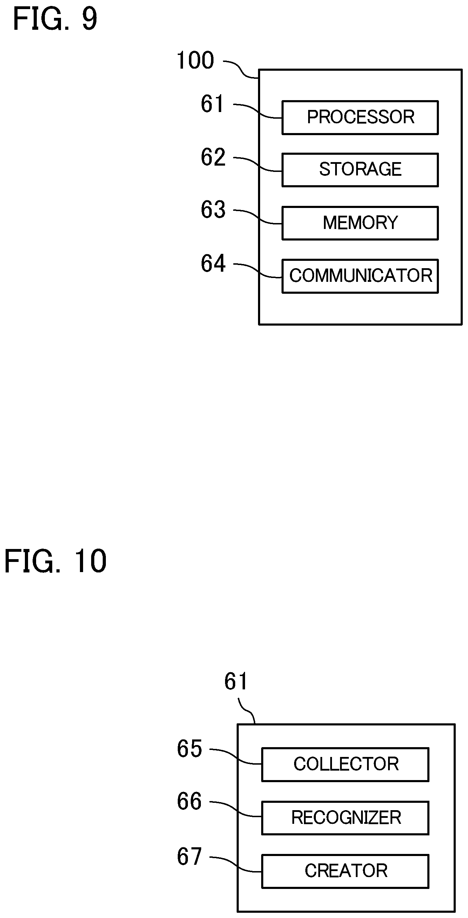

For example, the map generator 100 is a computer or a server group. FIG. 9 illustrates a schematic hardware configuration of the map generator 100. The map generator 100 includes a processor 61, a storage 62, a memory 63, and a communicator 64. The communicator 64 wirelessly communicates with an external device.

The processor 61 controls the entire map generator 100. The processor 61 performs various processes. For example, the processor 61 is a processor such as a central processing unit (CPU). The processor 61 may be a micro controller unit (MCU), a micro processor unit (MPU), a field programmable gate array (FPGA), a programmable logic controller (PLC), or system LSI, for example.

The storage 62 stores programs and various types of data to be executed by the processor 61. For example, the storage 62 stores a control program. The storage 62 stores geographical information 21 on an environment. The storage 62 may be, for example, a nonvolatile memory, a hard disc drive (HDD), or a solid state drive (SSD). The memory 63 temporarily stores data or other information. For example, the memory 63 is a volatile memory.

FIG. 10 is a functional block diagram of the processor 61. The processor 61 reads programs from the storage 62 and develops the programs to the memory 63 to thereby perform various functions. Specifically, the processor 61 serves as a collector 65 that collects monitoring information, a recognizer 66 that recognizes an obstacle in the environment from the monitoring information, and a creator 67 that generates the map 2.

The collector 65 collects monitoring information from the first monitors 8A and the second monitors 8B. In this example, since the mover 1 also has the function of acquiring monitoring information, the collector 65 also collects monitoring information from the mover 1. Specifically, the collector 65 periodically transmits a search instruction for acquiring monitoring information to the first monitors 8A, the second monitors 8B, and the mover 1 together with the map 2 through the communicator 64. The map 2 at this time includes at least the search information 27. The first monitors 8A, the second monitors 8B, and the mover 1 that have received the search instruction and the map 2 acquire monitoring information and transmit the acquired monitoring information to the map generator 100. The collector 65 receives the monitoring information from each of the first monitors 8A, the second monitors 8B, and the mover 1 through the communicator 64 and stores the monitoring information in the storage 62. Since the search instruction is periodically transmitted, the monitoring information is also periodically collected.

The recognizer 66 recognizes obstacles in the environment based on the monitoring information. The recognizer 66 integrates and processes the monitoring information stored in the storage 62 to identify the obstacles in the environment. For example, the recognizer 66 synchronizes the monitoring information stored in the storage 62. The recognizer 66 integrates the synchronized monitoring information based on a sensor fusion technique to identify obstacles. The recognizer 66 performs state estimation of the identified obstacles to estimate positions, speeds, types, sizes, shapes, and so forth of the obstacles. The recognizer 66 classifies the obstacles into first obstacles and second obstacles based on the type and other properties of the obstacles. The first obstacles are obstacles as targets of the first hazardous area information 23, that is, static obstacles. The second obstacles are obstacles as targets of the second hazardous area information 24, that is, dynamic obstacles.

The creator 67 refers to each information and generates the map 2. Specifically, the creator 67 reads the geographical information 21 stored in the storage 62. The creator 67 generates the hazardous area information 22, the obstacle information 25, the disturbance information 26, and the search information 27 based on the obstacles recognized by the recognizer 66.

-First Hazardous Area Information-

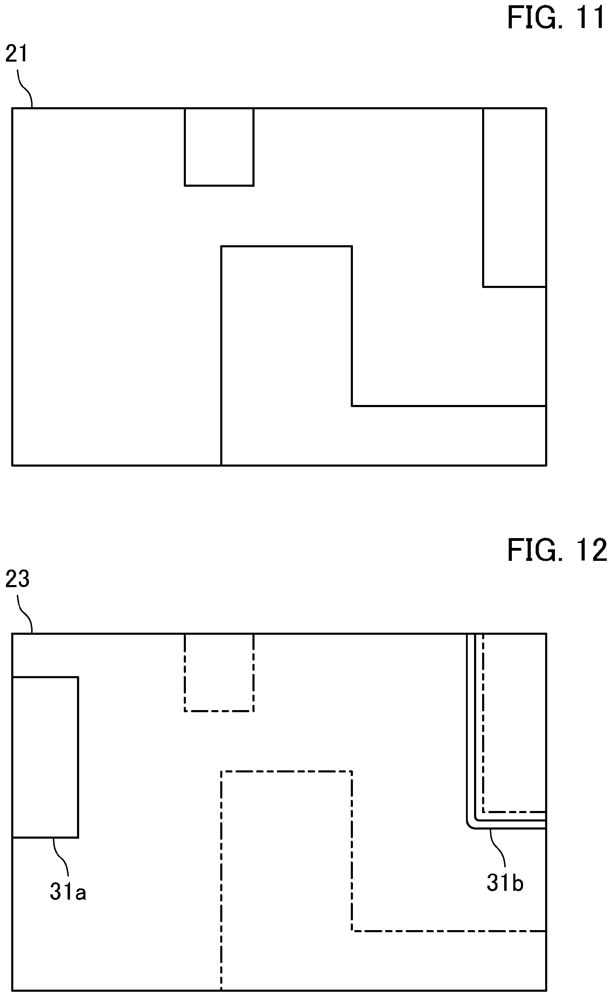

The creator 67 generates the first hazardous area information 23 based on the first obstacles. FIG. 11 is a schematic view showing an example of the geographical information 21. FIG. 12 is a schematic view showing an example of the first hazardous area information 23. In the example of FIG. 11, in the geographical information 21, a road is partitioned by buildings and others. In FIG. 12, the geographical information 21 is indicated by chain double-dashed lines for reference. In the creator 67, regions enclosing obstacles recognized as first obstacles by the recognizer 66 are set as the first hazardous areas 31. In the example of FIG. 12, two first hazardous areas 31a and 31b are set. The first hazardous area 31a corresponds to a first obstacle identified as a construction site. The first hazardous area 31b corresponds to a first obstacle identified as a rough terrain. The creator 67 stores positions and outer shapes of the first hazardous areas 31a and 31b in the storage 62 as the first hazardous area information 23.

At this time, the creator 67 may set an avoidance priority indicating the necessity of avoidance in the first hazardous areas 31. That is, the creator 67 obtains an avoidance priority of the first hazardous areas 31 based on the monitoring information, and sets the avoidance priority in the first hazardous areas 31. The creator 67 sets a high avoidance priority in the first hazardous area 31 that should be absolutely avoided, and sets a low avoidance priority in the first hazardous area 31 that should be avoided if possible. For example, the creator 67 sets a high avoidance priority in the first hazardous area 31a corresponding to a construction site, and sets a low avoidance priority in the first hazardous area 31b corresponding to a rough terrain.

In a case where fairways, passages, or roads are defined by a law or a custom, the creator 67 may include non-passable areas as the first hazardous areas 31 in the first hazardous area information 23. For example, in a case where a traveling direction is defined by a law or a custom in a sea area, regions corresponding to a fairway that can be in the opposite direction, can be set as the first hazardous areas 31. The map generator 100 can acquire information on fairways, passages, or roads defined by a law or a custom from an external database or others.

-Second Hazardous Area Information-

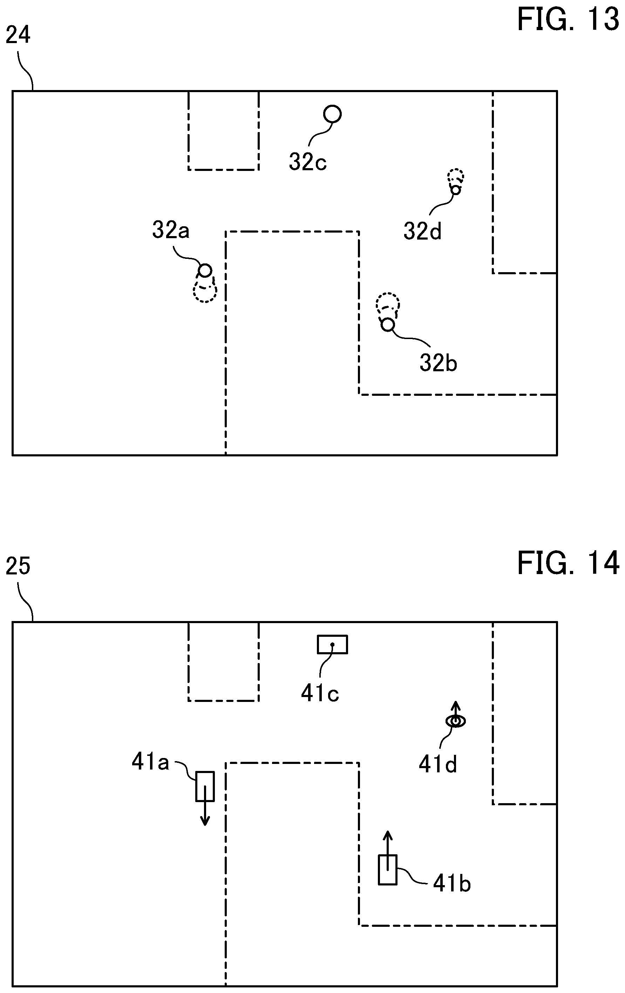

The creator 67 generates the second hazardous area information 24 based on second obstacles. FIG. 13 is a schematic view showing an example of the second hazardous area information 24. In FIG. 13, the geographical information 21 is indicated by chain double-dashed lines for reference. The creator 67 performs a behavior prediction with a time lapse based on information on, for example, the speeds of obstacles recognized as second obstacles by the recognizer 66, and areas where the second obstacles can be present are set as the second hazardous areas 32. The behavior prediction of the second obstacle is executed by various known techniques. In the example of FIG. 13, four second hazardous areas 32a, 32b, 32c, and 32d are set. The second hazardous area 32a corresponds to a second obstacle identified as a moving vehicle. The second hazardous area 32b corresponds to a second obstacle identified as another moving vehicle. The second hazardous area 32c corresponds to a third obstacle identified as yet another vehicle that is stopped. The second hazardous area 32d corresponds to the second obstacle identified as a moving person. The second hazardous areas 32a and 32b correspond to moving vehicles, and thus, are relatively large. The second hazardous area 32c corresponds to a stationary vehicle, and thus, is relatively small, and a uniform avoidance priority is set in all the directions. The second hazardous area 32d corresponds to a person, and thus, is smaller than the second hazardous areas 32a and 32b.

The creator 67 may also set an avoidance priority in the second hazardous areas 32, in a manner similar to the first hazardous areas 31. That is, the creator 67 obtains an avoidance priority of the second hazardous areas 32 based on the monitoring information, and sets the avoidance priority in the second hazardous areas 32. For example, the creator 67 sets a low avoidance priority in the second hazardous area 32 corresponding to the second obstacle showing a stable behavior, and sets a high avoidance priority in the second hazardous area 32 corresponding to the second obstacle showing an unstable behavior. In a case where a mover passing in a passage prohibited area is identified as the second obstacle, the creator 67 sets a high avoidance priority in the second hazardous area 32 corresponding to this mover.

The creator 67 may change the avoidance priority in the second hazardous area 32. That is, the avoidance priority in the second hazardous area 32 may not be uniform. The creator 67 obtains an avoidance priority within the second hazardous area 32 based on the monitoring information and sets the avoidance priority in the second hazardous area 32. Since the second hazardous areas 32 are set based on behavior prediction of second obstacles, existence probability of second obstacles varies even in the second hazardous areas 32. A high avoidance priority is set in a portion of the second hazardous area 32 with a high existence probability of a second obstacle, such as a portion close to the current position of the second obstacle, whereas a low avoidance priority is set in a portion with a low existence probability of a second obstacle, such as a portion away from the current position of the second obstacle. In FIG. 13, avoidance priorities in three stages are used, solid lines indicate portions with high avoidance priority, chain lines indicate portions with intermediate avoidance priority, and broken lines indicate portions with low avoidance priority.

As an example, assuming that a predicted trajectory of a second obstacle is represented by a motion model below, the creator 67 obtains a predicted distribution by using a filter such as a Kalman filter or a Bayesian filter.

$$x_{t+1} = f(x_t, u_t, \theta) + \omega \qquad \cdots (1)$$

where $x_t$ is a state quantity of a second obstacle at time t, $u_t$ is an input (speed or acceleration) of the second obstacle at time t, $\theta$ is a parameter of a motion model such as mass or viscous force, and $\omega$ is a disturbance of, for example, random noise.

Then, the creator 67 uses a prediction model below for each second obstacle.

$$p(x_{t+1}|\theta, \alpha, \beta) = \iint p(x_{t+1}|x_t, u_t, \theta, \alpha)p(x_t, u_t|\beta)dx_t du_t \qquad \cdots (2)$$

where p $(x_{t+1}|\theta, \alpha, \beta)$ is a posterior distribution of $x_{t+1}$, p $(x_t, u_t|\beta)$ is a prior distribution of $x_t$, p $(x_{t+1}|x_t, ut, \theta, \alpha)$ is a probability motion model, and $\alpha$ and $\beta$ are parameters of the motion model.

In Equations (1) and (2), parameters $\theta$, $\alpha$, and $\beta$ of the motion model need to be set, and the creator 67 estimates the parameters $\theta$, $\alpha$, and $\beta$. For example, the creator 67 estimates the parameters based on the type and outer shape of a second obstacle. In a case where a second obstacle is a ship, wave drag that is the dominant resistance of the ship can be estimated from the speed and ship shape (Froude number and wave drag coefficient). Therefore, the creator 67 can estimate the parameters $\theta$, $\alpha$, and $\beta$ as functions of the ship type and speed.

Alternatively, the creator 67 estimates a motion model or a distribution of input by using data data-driven control. For example, the creator 67 estimates a stochastic motion model and an input distribution by machine learning (e.g., Gaussian process or Bayes estimation) using past trajectory data. The creator 67 can calculate a predicted distribution of a second obstacle by a sampling method such as a markov chain monte carlo (MCMC) method. Alternatively, the creator 67 approximates a predicted distribution of a second obstacle by, for example, moment matching.

The creator 67 may predict a trajectory of a second obstacle by using a database other than a motion model. The creator 67 may stochastically predict the trajectory from a database of past trajectories of the second obstacle. The creator 67 may compare the trajectory of the second obstacle with past trajectories in the database to perform sampling based on likelihood.

The creator 67 may also set one second hazardous area 32 based on multiple second obstacles. For example, the creator 67 performs clustering on second obstacles based on position and moving direction, and approximates a cluster speed distribution by moment matching or other techniques from an average speed and a speed distribution of second obstacles in a cluster. The creator 67 may derive a predicted distribution of a cluster from the approximated speed distribution to set the second hazardous area 32. For example, in a congestion range where second obstacles are congested, setting of the second hazardous area 32 is simplified.

-Obstacle Information-

The creator 67 generates obstacle information 25 based on obstacles. FIG. 14 is a schematic view showing an example of the obstacle information 25. In FIG. 14, the geographical information 21 is indicated by chain double-dashed lines for reference. The creator 67 stores the positions, speeds, types, sizes, and shapes of obstacles recognized as second obstacles by the recognizer 66, in the storage 62 as the obstacle information 25. The creator 67 may also store a speed dispersion of the second obstacle in the storage 62 as the obstacle information 25. In addition, the creator 67 may also store parameters of the motion model used in obtaining the second hazardous area 32 in the storage 62 as the obstacle information 25 of corresponding second obstacles.

In the example of FIG. 14, the obstacle information 25 includes four second obstacles. FIG. 14 schematically illustrates the position and speed of each second obstacle. A second obstacle 41a is a moving vehicle. A second obstacle 41b is another moving vehicle. A second obstacle 41c is yet another vehicle that is stopped. A second obstacle 41d is a moving person.

-Disturbance Information-

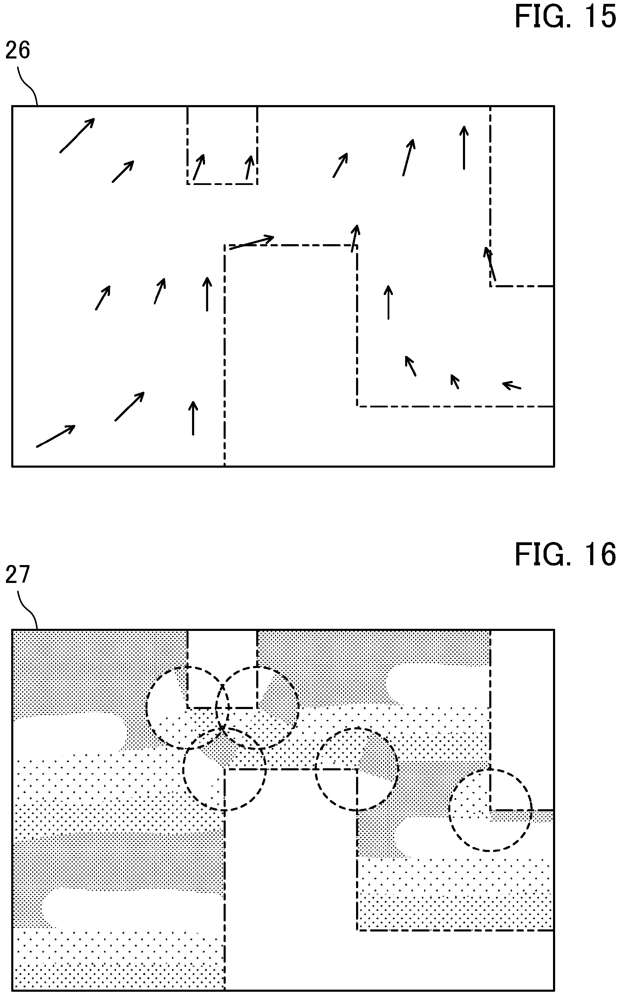

The creator 67 generates the disturbance information 26. FIG. 15 is a schematic view showing an example of the disturbance information 26. In FIG. 15, the geographical information 21 is indicated by chain double-dashed lines for reference. The creator 67 generates the disturbance information 26 based on information on disturbance from the mover 1 or the monitors 8. The disturbance is, for example, an airflow direction and a wind velocity. The disturbance may be tidal current. The creator 67 represents the disturbance information 26 as a vector field as shown in FIG. 15.

For example, in a case where the mover 1 or the monitor 8 includes a Doppler LiDAR sensor as a monitoring sensor, the mover 1 or the monitor 8 can measure an airflow direction and a wind velocity in the environment. The mover 1 or the second monitor 8B measures the airflow direction and the wind velocity at each point while moving in the environment. The first monitor 8A measures am airflow direction and a wind velocity at a point at which the first monitor 8A is placed. The map generator 100 collects position information, an airflow direction, and a wind velocity at a measurement point from the mover 1 or the monitor 8. The monitoring sensor for detecting an airflow direction and a wind velocity is not limited to an anemometer and may be a camera such as an infrared camera. The infrared camera can take an image of steam or smoke in the environment, and based on steam or smoke, an airflow direction and a wind velocity can be derived.

Alternatively, in a case where the mover 1 or the second monitor 8B includes a disturbance observer, the creator 67 may collect disturbance obtained by the disturbance observer from the mover 1 or the second monitor 8B.

In a case where the disturbance includes tidal current, an underwater drone may be employed as the second monitor 8B. The creator 67 may obtain tidal current based on disturbance obtained by a disturbance observer of the underwater drone or on a water-resistance speed by a doppler velocity log (DVL).

Since points at which disturbance can be detected are limited in the environment, the creator 67 may estimate a vector field in the environment from actually obtained vectors of disturbances by using a model obtained through machine learning. Alternatively, the creator 67 may interpolate vectors of disturbances at each point in the environment by a technique such as Gaussian process from actually obtained vectors of disturbance.

-Search Information-

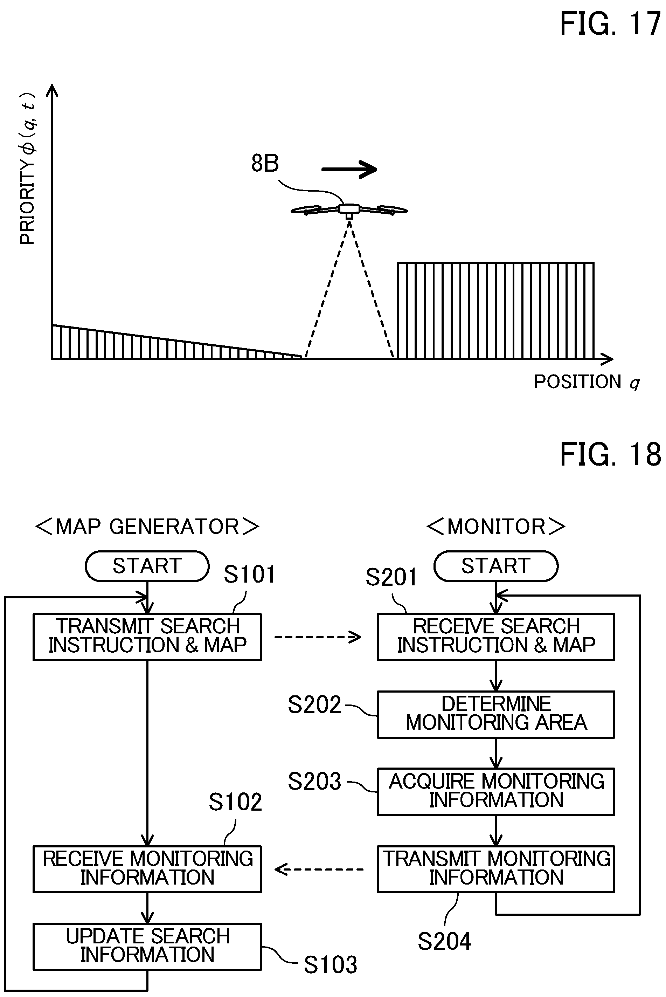

The creator 67 generates the search information 27. FIG. 16 is a schematic view showing an example of the search information 27. FIG. 17 is a graph showing a monitoring priority change. In FIG. 16, the geographical information 21 is indicated by chain double-dashed lines for reference. The creator 67 generates the search information 27 based on the monitoring information from the monitor 8. The search information 27 is information related to a monitoring priority at each position in the environment. The creator 67 sets a monitoring priority at each position in accordance with an elapsed time since monitoring information at each position was acquired. As the time passes after the monitoring information is acquired, the monitoring priority increases. In FIG. 16, the monitoring priority is represented by the density of dots. A region with a high dot density has a high monitoring priority, and a region with a low dot density has a low monitoring priority.

For example, the creator 67 sets a monitoring priority $\varphi$ (q, t) at each position q in an environment Q as a function of the position q and a time t. The monitoring priority $\varphi$ gradually increases with the elapsed time since the monitoring information was acquired, and decreases when the monitoring information is acquired, as represented by equation below. The search information 27 includes a monitoring priority $\varphi$ (q, t) or a partial differentiation of a monitoring priority $\varphi$ (q, t) represented by Equation (3):

$$\frac{\partial \emptyset(q,t)}{\partial t} = \begin{cases} -\frac{1}{\tau_d(q)} \emptyset(q,t) & observed \\ \frac{1}{\tau_u(q)} \left(1 - \emptyset(q,t)\right) & not\ observed \end{cases} \qquad (3)$$

where $\tau_d$(q) is a time constant related to a decrease of a monitoring priority $\varphi$ at a position q, and $\tau_u$(q) is a time constant related to an increase of the monitoring priority $\varphi$ at the position q.

In FIG. 17, the ordinate represents a monitoring priority $\varphi$, and the abscissa represents a position q. The second monitor 8B moves from the left to the right along the abscissa while acquiring monitoring information. A monitoring priority $\varphi$ at a position q at which monitoring information is acquired by the second monitor 8B is low, and a monitoring priority $\varphi$ at a position q at which monitoring information is not acquired yet is high. A monitoring priority $\varphi$ at a position q at which monitoring information has been already acquired increases with a lapse of time.

The time constants $\tau_d$(q) and $\tau_u$(q) may be values different in accordance with the position q. For example, for a position q with a large number of past accidents, the time constant $\tau_u$(q) may be set such that $1/\tau_u$(q) is larger than those at the other positions q.

The creator 67 basically changes the monitoring priority $\varphi$ according to Equation (3). However, the creator 67 may change the monitoring priority $\varphi$ uniquely in accordance with a specific event, irrespective of Equation (3). For example, the creator 67 may predict a trajectory of the mover 1 to set a high monitoring priority $\varphi$ at a position q on the predicted trajectory. Accordingly, the monitoring priority $\varphi$ on a future trajectory of the mover 1 increases. In a case where an unidentified mover with an unknown ID or other details is detected, the creator 67 may set a high monitoring priority $\varphi$ at a position near the unidentified mover to follow the unidentified mover. To increase the monitoring priority $\varphi$, the time constant $\tau_u$(q) may be increased without directly changing the monitoring priority $\varphi$. Accordingly, an increase rate of the monitoring priority $\varphi$ at a specific position q increases, and the monitoring priority $\varphi$ increases in an early stage.

-Monitoring Process-

Next, a monitoring process in the driving assistance system 1000 will be described. The driving assistance system 1000 performs a monitoring process of collecting monitoring information at each position in the environment. In the monitoring process, the map generator 100 transmits a search instruction to the monitors 8, and the monitors 8 acquire monitoring information and transmit the monitoring information to the map generator 100. FIG. 18 is a flowchart of the monitoring process. The map generator 100 and the monitors 8 perform the monitoring process according to the flowchart of FIG. 18. The monitors 8 periodically exchange position information each other and each recognize positions of the other monitors 8.

First, in step S101, the map generator 100 transmits a search instruction and a map 2 for search to the monitors 8. The map 2 for search includes at least the search information 27. In this example, the map 2 also includes the geographical information 21. The map 2 is common to all the monitors 8. The map generator 100 generates the search information 27 based on currently acquired monitoring information. Specifically, the creator 67 obtains a monitoring priority φ from Equation (3) based on an elapsed time t since monitoring information at each position q in the environment was acquired, and generates the search information 27. The creator 67 reads the geographical information 21 from the storage 62, and generates the map 2 including the geographical information 21 and the search information 27. The map generator 100 transmits the search instruction and the map 2 to all the monitors 8. At this time, the map generator 100 may also transmit search instruction and the map 2 to the mover 1 having the function of acquiring monitoring information.

After the search instruction and the map 2 have been transmitted, the monitors 8 receive the search instruction and the map 2 in step S201. In step S202, each of the monitors 8 determines a monitoring area for which monitoring information should be acquired, based on the search information 27. Each monitor 8 determines a monitoring area based on the search information 27 such that the overall monitoring priority φ in the environment decreases. The search information 27 includes the monitoring priority φ (q, t) or a partial differentiation of the monitoring priority φ (q, t) represented by Equation (3). Specifically, each monitor 8 determines a monitoring area such that the overall priority J in the equation below decreases, and sets a speed (specifically speed vector) $u_i$ of the monitor 8. Consequently, a monitoring area is set in an area with a high monitoring priority φ in the environment.

$$J = \int_{q \in Q} \min_i \|p_i - q\| \emptyset(q, t) dq \qquad \cdot\cdot\cdot (4)$$

$$u_i = -C \frac{\partial J}{\partial p_i} \qquad \cdot\cdot\cdot (5)$$

where $p_i$ is a position vector of the monitor 8, $u_i$ is a speed vector of the monitor 8, and C is a constant.

At this time, each monitor 8 determines a monitoring area by performing cooperative control with other monitors 8. Specifically, the second monitor 8B is aware of positions of the first monitor 8A and the other second monitors 8B. The second monitor 8B sets monitoring information in an area with a high monitoring priority φ located relatively near the second monitor 8B itself. In a case where there is another monitor 8 closer to an area with a high monitoring priority φ than the second monitor 8B itself, the second monitor 8B allows the other monitors 8 to acquire monitoring information on this area. Since the first monitor 8A cannot move, the first monitor 8A determines a monitoring area within the monitorable range of the first monitor 8A itself. In this manner, the monitor 8 determines a monitoring range in cooperation with other monitors 8.

Once the monitoring area is set, the monitor 8 acquires monitoring information in step S203. Specifically, the first monitor 8A adjusts the direction (e.g., field of view (FOV) of a LiDAR sensor) of the monitoring sensor 81 to the monitoring area, and the monitoring sensor 81 acquires monitoring information. The second monitor 8B moves such that the FOV of the monitoring sensor 91 matches the monitoring area, and the monitoring sensor 91 acquires monitoring information. At this time, the second monitor 8B refers to the geographical information 21 and generates a route that does not collide with buildings or planimetric features.

The mover 1 with the function of acquiring monitoring information acquires monitoring information necessary for autonomous driving in the case of executing autonomous driving. That is, the mover 1 acquires monitoring information, irrespectively of the monitoring priority φ.

Thereafter, in step S204, the monitor 8 transmits the acquired monitoring information to the map generator 100.

In step S102, the map generator 100 receives the monitoring information. The map generator 100 collects monitoring information from the monitors 8 in the environment.

After the map generator 100 has received the monitoring information, the map generator 100 updates the search information 27 in step S103. Specifically, the map generator 100 decreases the partial differentiation of the monitoring priority φ (q, t) at a point at which monitoring information is acquired according to the upper expression in Equation (3), and increases the partial differentiation of the monitoring priority φ (q, t) at a point at which no monitoring information is acquired according to the lower expression in Equation (3). In this manner, the search information 27 is updated.

Subsequently, the map generator 100 repeats processes from step S101 by using the updated search information 27.

In the manner described above, the search information 27 is updated such that the monitoring priority φ increases with the elapsed time since the monitoring information was acquired, and based on the updated search information 27, the monitors 8 acquire monitoring information on areas with high monitoring priority φ with priority. As a result, the number of points that are left without monitoring for a long period in the environment decreases so that monitoring information in the environment can be thereby kept up-to-date.

-Map Generation Process-

Driving assistance in the driving assistance system 1000 will now be described. The driving assistance system 1000 performs a map generation process of generating the map 2 for driving assistance based on monitoring information in the environment. In the map generation process, the map generator 100 generates the map 2 based on the monitoring information.

The map 2 for driving assistance includes at least the geographical information 21 and the hazardous area information 22. In this example, the map 2 includes the first hazardous area information 23 and the second hazardous area information 24 as the hazardous area information 22. The map 2 also includes the obstacle information 25 and the disturbance information 26. The map 2 is common to all the movers 1. The map generator 100 may generate the map 2 in a form including all the geographical information 21, the hazardous area information 22, the obstacle information 25, and the disturbance information 26. Alternatively, the map generator 100 may generate different types of maps 2 including different types of information, such as a map 2 including the geographical information 21 and the hazardous area information 22, a map 2 including the geographical information 21 and the obstacle information 25, and the map 2 including the disturbance information 26. In the following description, the map 2 includes the geographical information 21, the first hazardous area information 23, the second hazardous area information 24, the obstacle information 25, and the disturbance information 26.

The map generator 100 periodically collects monitoring information from the monitors 8 and periodically updates the map 2. The map generator 100 periodically transmits the map 2 to the mover 1. The collection period of the monitoring information, the update period of the map 2, and the transmission period of the map 2 may be or may not be synchronized.

-Autonomous Driving-

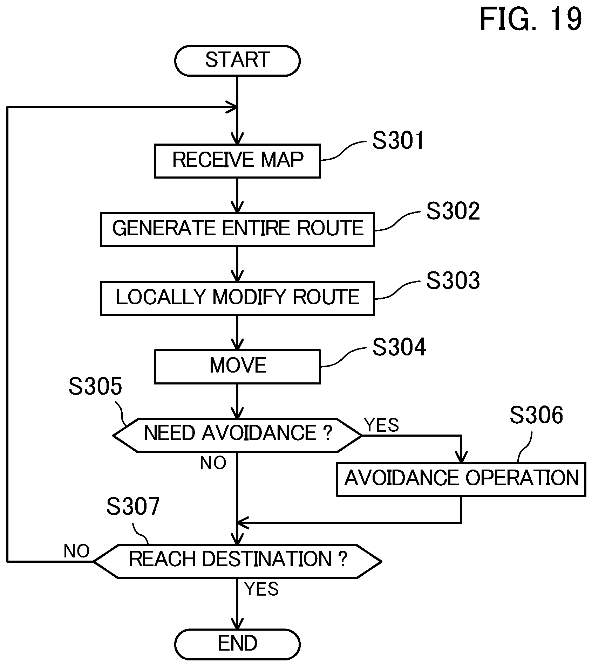

Autonomous driving of the mover 1 will now be described. The mover 1 receives the map 2 from the map generator 100, generates a route based on the map 2, and performs autonomous driving in accordance with the generated route. The mover 1 performs avoidance operation to an obstacle, when necessary. FIG. 19 is a flowchart of autonomous driving. The mover 1 performs autonomous driving according to the flowchart of FIG. 19.

First, in step S301, the mover 1 receives the map 2. In this example, the map 2 includes the geographical information 21, the first hazardous area information 23, the second hazardous area information 24, the obstacle information 25, and the disturbance information 26.

In step S302, the mover 1 generates a route 5 based on the map 2. Specifically, a destination 51 is set for the mover 1. A transit point 52 is set for the mover 1 in some cases. The route creator 18 generates the entire route 5 from the current location to the destination 51 based on the geographical information 21 and the first hazardous area information 23. In the case where the transit point 52 is set, the route creator 18 generates the route 5 from the current location to the destination 51 by way of the transit point 52. At this time, the route creator 18 generates the route 5 in consideration of influence of disturbance based on the disturbance information 26.

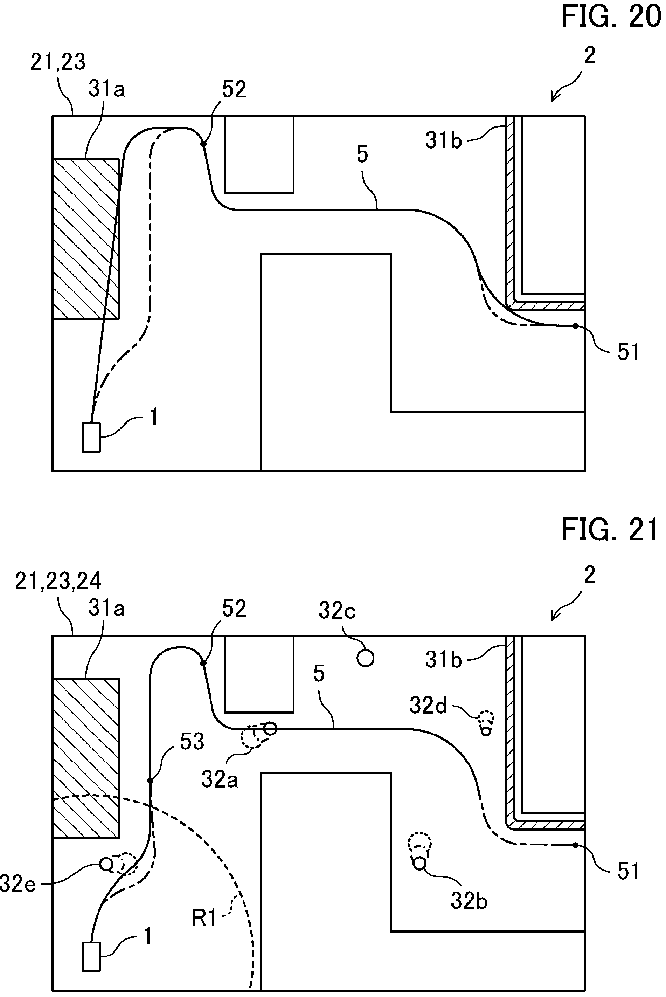

FIG. 20 is a schematic view of a map 2 in which the first hazardous area information 23 is superimposed on the geographical information 21. In this example, the destination 51 and the transit point 52 are set. The route creator 18 of the mover 1 basically generates the route 5 from the current location to the destination based on the geographical information 21. The route creator 18 first generates a route 5 as indicated by the solid line in FIG. 20. The route creator 18 refers to the geographical information 21 and generates a route that does not collide with planimetric features or other obstacles. In a case where a road, a passage, or a fairway is set in the environment, the route creator 18 generates a route along the road, the passage, or the fairway. The route creator 18 also refers to the disturbance information 26 and generates a route 5 that avoids areas such as a strong wind area. For example, the route creator 18 generates a route by using an A-star search algorithm, a hybrid A-star search algorithm, or an RRT-star search algorithm.

Here, in a case where the first hazardous area 31 is present on or near the generated route 5, the route creator 18 modifies the route 5. In the example of FIG. 18, the route 5 generated only from the geographical information 21 passes on the first hazardous area 31a and also passes near the first hazardous area 31b. Thus, as indicated by the chain line, the route creator 18 modifies the route 5 such that the route 5 bypasses the first hazardous area 31a and passes away from the first hazardous area 31b. At this time, the route creator 18 also refers to the geographical information 21 to modify the route 5 such that the route 5 avoids interference with planimetric features and other obstacles.

It should be noted that in a case where an avoidance priority is set in the first hazardous area 31, the route creator 18 may determine whether to bypass the first hazardous areas 31, how far the route 5 and the first hazardous areas 31 should be kept apart, and others, based on the avoidance priority. For example, a relatively high avoidance priority is set in the first hazardous area 31a, and a relatively low avoidance priority is set in the first hazardous area 31b. In this case, the route creator 18 may modify the route 5 such that the route 5 bypasses the first hazardous area 31a and does not bypass the first hazardous area 31b. Alternatively, the route creator 18 may modify the route 5 such that the route 5 greatly bypasses the first hazardous area 31a and slightly bypasses the first hazardous area 31b.

Then, in step S303, the route creator 18 locally modifies the route 5. Specifically, the route creator 18 modifies the route 5 based on the second hazardous area information 24. FIG. 21 is a schematic view of the map 2 in which the first hazardous area information 23 and the second hazardous area information 24 are superimposed on the geographical information 21. The route creator 18 determines based on the second hazardous area information 24 whether the second hazardous area 32 is present or not on or near the route 5 within a predetermined first range R1 from the current location of the mover 1. In the example of FIG. 21, the second hazardous area 32e is located on the route 5 within the first range R1. The route creator 18 modifies the route 5 such that the route 5 bypasses the second hazardous area 32e. Specifically, the route creator 18 sets a local destination (i.e., waypoint) 53 on a route 5 outside the first range R1, and as indicated by the chain line, modifies the route 5 such that the route 5 bypasses the second hazardous area 32e while heading toward the waypoint 53. At this time, the route creator 18 also refers to the geographical information 21 and the first hazardous area information 23 and modifies the route 5 such that the route 5 avoids interference with the planimetric features and other obstacles and the first hazardous area 31. In addition, the route creator 18 may also refer to the disturbance information 26. For example, the route creator 18 may search for a route with high energy efficiency in consideration of dynamics of the mover 1 and disturbance.

Although the second hazardous area 32a is also located on the route 5, the second hazardous areas 32a is outside the first range R1, and thus, the route creator 18 does not modify the route 5 corresponding to the second hazardous area 32a.

The route creator 18 generates a route 4 in consideration of the first hazardous areas 31 within and outside the first range R1 for the first hazardous areas 31, whereas the route creator 18 generates a route 4 in consideration of only the second hazardous areas 32 within the first range R1 for the second hazardous areas 32. That is, since the first hazardous areas 31 hardly change with time, the route creator 18 considers the first hazardous areas 31 ranging to locations relatively far from the mover 1. On the other hand, since the second hazardous areas 32 can change with time, the route creator 18 considers only the second hazardous areas 32 relatively close to the mover 1.

In a case where an avoidance priority is set to the second hazardous areas 32, the route creator 18 may determine, for example, whether to bypass the second hazardous areas 32, how far the second hazardous areas 32 and the route 5 should be kept apart, and others, based on the avoidance priority. For example, in a case where there is the second hazardous area 32 where a mover passing in a passage prohibited area corresponds to a second obstacle, a relatively high avoidance priority is set in this second hazardous area 32. In this case, the route creator 18 may modify the route 5 such that the route 5 bypasses this second hazardous area 32 with priority or greatly bypasses this second hazardous area 32 as compared to the other second hazardous areas 32.

In a case where an avoidance priority is set within the second hazardous area 32, the route creator 18 can determine a portion that should be definitely avoided and a portion that should be avoided if possible within the second hazardous area 32. For example, the route creator 18 may modify the route 5 such that the route 5 greatly bypasses a portion with a high avoidance priority and slightly bypasses a portion with a low avoidance priority within the second hazardous area 32. Alternatively, the route creator 18 may modify the route 5 such that the route 5 bypasses a portion with a high avoidance priority and passes only a portion with a low avoidance priority within the second hazardous area 32.

Once the route 5 is generated, the mover 1 moves in step S304. The driving executor 19 performs feedback control on the actuator 12 such that the mover 1 moves along the route 5 with reference to detection results of the monitoring sensor 11 and the position detector 14.

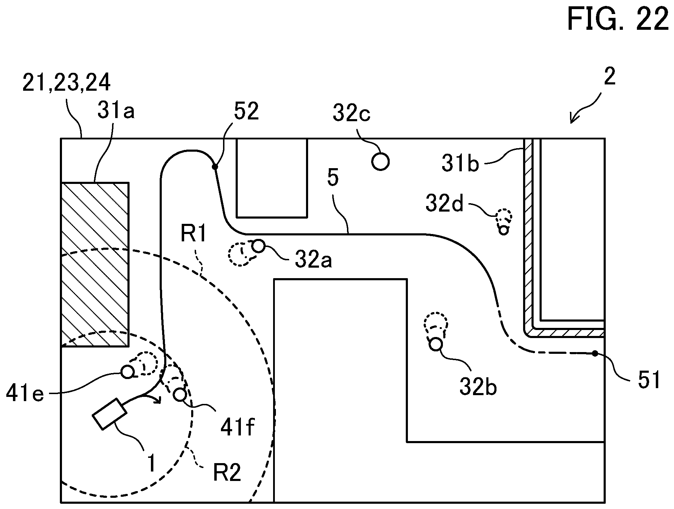

Then, in step S305, the mover 1 determines whether avoidance operation is necessary, based on the map 2. The driving executor 19 determines whether there is an obstacle for which collision is to be avoided, based on the obstacle information 25 in the map 2. FIG. 22 is a schematic view of the map 2 in which a behavior of an obstacle predicted based on the obstacle information 25 is superimposed on the geographical information 21. In FIG. 22, the first hazardous area information 23 and the second hazardous area information 24 are also superimposed.

Specifically, the driving executor 19 determines whether an obstacle is present within a predetermined second range R2 from the current location of the mover 1, based on the obstacle information 25. The second range R2 is narrower than the first range R1. In a case where an obstacle is present within the second range R2, the driving executor 19 predicts a behavior of the obstacle and determines whether there is a possibility that the obstacle interferes with the mover 1. In the example of FIG. 21, obstacles 41e and 41f are present within the second range R2. Specifically, based on the positions, speeds, types, sizes, shapes, or parameters of a motion model of the obstacles 41e and 41f as targets, the driving executor 19 estimates predicted trajectories of the obstacles. In a manner similar to the creator 67, the driving executor 19 may estimate predicted trajectories of the obstacles 41e and 41f by using parameters and others of a motion model.

In a case where the obstacle 41e or 41f within the second range R2 can interfere with the route 5, the driving executor 19 performs avoidance operation based on the obstacle information 25. The driving executor 19 performs feedback control on the position of the mover 1 such that the mover 1 avoids the predicted trajectory of the obstacle 41e or 41f. For example, the driving executor 19 controls the mover 1 by using a model predictive control (MPC) or control barrier function (CBF). For example, the mover 1 moves out of the route 5 to avoid the obstacle 41e or 41f. The mover 1 stops or decelerates to avoid collision with the obstacle 41e or 41f. At this time, the route creator 18 also refers to the geographical information 21 and the first hazardous area information 23 and moves the mover 1 such that the mover 1 avoids interference with the planimetric features and other obstacles and the first hazardous areas 31. Alternatively, a motion executor 19 may calculate an executable operation amount obtaining both disturbance compensation and avoidance in consideration of influence of disturbance, and operate the actuator 12 with the calculated executable operation amount.

In a case where avoidance operation is completed or no obstacle that can interference is present within the second range R2, the driving executor 19 determines whether the mover 1 has reached the destination 51 in step S307. In a case where the mover 1 has not reached the destination 51 yet, the mover 1 returns to step S301 and repeats the process from step S301. In a case where the mover 1 has reached the destination 51, the mover 1 finishes autonomous driving.

In this manner, in the autonomous driving, the mover 1 generates and modifies the route 5 based on the map 2 received from the map generator 100, and performs avoidance operation as necessary, to thereby autonomously move without interference with an obstacle and other hazards to the destination 51. The mover 1 periodically receives the updated map 2 to thereby generate and modify the route 5 and perform avoidance operation based on the latest map 2.

In this driving assistance system 1000, the hazardous area information 22 is obtained based on monitoring information in the environment, and the map 2 including the geographical information 21 and the hazardous area information 22 is generated. The use of the map 2 eases generation of the route 5. Specifically, in a case where only a detection result of an obstacle is given to the geographical information 21 as monitoring information, identification of obstacles, behavior prediction of obstacles, and other processes need to be performed in generating the route 5. However, the map generator 100 obtains the hazardous areas 3 based on the monitoring information, and generates the hazardous area information 22. By generating the route 5 while treating the hazardous areas 3 as areas to be avoided when generating the route 5 based on the geographical information 21, it is possible to generate the route 5 that avoids interference with obstacles and other hazards in the environment. Since it is unnecessary to perform identification of obstacles, behavior prediction of obstacles, and other processes, the route 5 can be easily generated.

Since the map generator 100 generates the hazardous areas 3 corresponding to motion of obstacles, the map generator 100 generates the route 5 in consideration of the hazardous area 3 to thereby enable generation of the route 5 that can avoid interference with dynamic obstacles. Specifically, the map generator 100 predicts behaviors of dynamic obstacles and generates the second hazardous areas 32 including predicted behaviors of the obstacles. That is, the predicted behaviors of dynamic obstacles are represented in the form of second hazardous areas 32. By generating the route 5 avoiding the second hazardous areas 32, the route 5 avoiding interference with dynamic obstacles can be easily generated without behavior prediction of obstacles in generating the route 5.

The map generator 100 classifies the hazardous areas 3 into the first hazardous areas 31 corresponding to static obstacles and the second hazardous areas 32 corresponding to dynamic obstacles. This enables the hazardous areas 3 to be appropriately reflected in generation of the route 5. Specifically, by classifying the hazardous areas 3 into the first hazardous areas 31 and the second hazardous areas 32, information on motion of obstacles is added to the hazardous areas 3. Accordingly, in generating the route 5, the hazardous areas 3 can be appropriately selected and reflected. For example, since the second hazardous areas 32 correspond to dynamic obstacles, the second hazardous areas 32 might change with time. Thus, the second hazardous areas 32 are preferably reflected in relatively short-term route planning. On the other hand, since the first hazardous areas 31 correspond to static obstacles, the first hazardous areas 31 hardly change with time. Thus, the first hazardous areas 31 are preferably reflected in relatively long-term route planning. By generating the route 5 using the first hazardous areas 31 and the second hazardous areas 32 appropriately, the route 5 can appropriately avoid obstacles.

In addition, the map generator 100 obtains an avoidance priority of a hazardous area based on monitoring information and sets the avoidance priority in the hazardous area. Accordingly, the hazardous area can be appropriately reflected in generation of the route 5. Specifically, it is possible to determine whether to reflect the hazardous area in generation of the route 5 based on the avoidance priority. Generation of the route 5 is subjected to various constraints. The hazardous area is one of the constraints. Based on the avoidance priority of the hazardous area, priority of the hazardous area in reflecting the hazardous area in generation of the route 5 can be determined.

The map generator 100 obtains avoidance priority within the hazardous area based on the monitoring information and sets the avoidance priority in the hazardous area. That is, different avoidance priorities can be given in the hazardous area. Accordingly, the hazardous area can be appropriately reflected in generation of the route 5. Specifically, for one hazardous area, a portion that should be definitely avoided and a portion that should be avoided if possible are determined based on the avoidance priority within the hazardous area.

The map generator 100 obtains the obstacle information 25 and adds the obstacle information 25 to the map. Accordingly, avoidance operation necessary for movement of the mover 1 along the route 5 can be performed. In route planning, even if a route 5 that avoids obstacles is generated, another obstacle that needs to be avoided might appear during actual movement. Thus, the obstacle information 25 as well as the hazardous area is also added to the map 2 so that the mover 1 can perform avoidance operation based on the obstacle information 25.

The map generator 100 obtains the disturbance information 26 and adds the disturbance information 26 to the map 2. Accordingly, the route 5 can be generated in consideration of disturbance as well as the hazardous area 3. While the mover 1 is moving, the mover 1 can be affected by disturbance. Generation of the route 5 based on the map 2 enables generation of the route 5 in consideration of influence of disturbance.

The map generator 100 obtains the search information 27 concerning monitoring priority at each position in the environment and adds the search information 27 to the map 2. Accordingly, the monitor 8 can determine an area for which monitoring information is acquired in the environment, based on the search information 27. As a result, the map generator 100 can appropriately collect monitoring information in the environment.

The monitoring priority is set in accordance with an elapsed time since monitoring information was acquired at each position in the environment. Accordingly, based on the elapsed time since the monitoring information was acquired, priority of an area for which monitoring information is acquired is determined. Accordingly, the overall monitoring information in the environment can be kept as up-to-date as possible.

In addition, a monitor 9 performs cooperative control with other monitors 9 in determining an area for which monitoring information is acquired, based on the search information 27. Specifically, the monitor 9 near an area with high monitoring priority acquires monitoring information on this area. The monitor 9 appropriately shares acquisition of monitoring information in the environment in cooperation with other monitors 9. As a result, the overall monitoring information in the environment can be kept as up-to-date as possible.

<<OTHER EMBODIMENTS>>

In the foregoing section, the embodiment has been described as an example of the technique disclosed in the present application. The technique disclosed here, however, is not limited to this embodiment, and is applicable to other embodiments obtained by changes, replacements, additions, and/or omissions as necessary. Components described in the above embodiment may be combined as a new exemplary embodiment. Components provided in the accompanying drawings and the detailed description can include components unnecessary for solving problems as well as components necessary for solving problems in order to exemplify the technique. Therefore, it should not be concluded that such unnecessary components are necessary only because these unnecessary components are included in the accompanying drawings or the detailed description.

The mover 1 and the monitor 8 in the driving assistance system 1000 are not limited to those of the example described above. For example, the mover 1 is not limited to a vehicle, and may be an autonomous robot (e.g., carrier pallet), a ship, or a flying device (e.g., drone), for example. The second monitor 8B may be a vehicle or an underwater drone.

The number of the movers 1 and the number of the monitors 8 included in the driving assistance system 1000 are not limited to those in the example of FIG. 1, and may be any numbers. The number of the first monitors 8A and the number of the second monitors 8B are also any numbers. For example, one of the first monitors 8A or the second monitors 8B may be omitted.

Communication of the map generator 100 with the mover 1 and the monitor 8 is not limited to communication through the relay 121. The map generator 100 may not be fixed. For example, the map generator 100 may be mounted on a mover to move together with the mover. For example, the map generator 100 may be mounted on a ship. The map generator 100 may collect monitoring information from nearby drones or other ships, and based on the monitoring information, may transmit the map 2 to the nearby movers 1.

The map 2 may not include all the types of information. For example, the map 2 may include at least one of the first hazardous area information 23 or the second hazardous area information 24, as the hazardous area information 22. The map 2 may not include at least one of the obstacle information 25 or the disturbance information 26.

The map 2 for search includes at least the search information 27. The map 2 for search may not include the geographical information 21.

The way of obtaining each type of information included in the map 2 and the way of expression thereof are not limited to those in the example described above. For example, the second hazardous area 32 is expressed as a shape obtained by overlaying three circles with different diameters, but is not limited to this example. For example, the second hazardous area 32 may be an oval or a square with a smooth outer shape.

The flowchart is merely an example. The steps in the flowchart may be changed, replaced, added, omitted, or the like as appropriate. Further, the order of steps in the flowchart may be changed or serial processes may be performed in parallel.

Functions performed by constitutional elements described herein may be implemented in circuitry or processing circuitry including a general-purpose processor, an application-specific processor, an integrated circuit, an application specific integrated circuit (ASIC), a central processing unit (CPU), conventional circuitry, and/or a combination thereof programmed to perform the functions described herein. A processor includes transistors and other circuits, and is regarded as circuitry or arithmetic circuitry. A processor may be a programmed processor that performs programs stored in a memory.

Circuitry, a unit, and means herein are hardware that is programmed to perform or performs the described functions. The hardware may be any hardware disclosed herein, or any hardware programmed or known to perform the functions described.

If the hardware is a processor considered to be of a type of circuitry, the circuitry, means, or a unit is a combination of hardware and software used to configure the hardware and/or the processor.

The techniques of the present disclosure described above are summarized as follows.

[1] A map generator 100 includes: a collector 65 that collects monitoring information in an environment; and a creator 67 that generates a map 2 for assisting autonomous driving of a mover 1 based on the monitoring information, wherein the creator 67 obtains a hazardous area 3 that is included in the environment and to be avoided, based on the monitoring information, and generates the map 2 including geographical information 21 and the hazardous area 3. With this configuration, the use of the map 2 eases generation of a route 5 in autonomous driving. That is, in generating the route 5, it is unnecessary to perform identification of an obstacle detected as the monitoring information, behavior prediction of the obstacle, and other processes. By treating the hazardous areas 3 as areas to be avoided when generating the route 5 based on the geographical information 21, it is possible to easily generate the route 5 that avoids interference with obstacles and other hazards in the environment. As a result, a calculation load in generating the route 5, that is, the processing load, for example, can be reduced.

[2] In the map generator 100 of [1], the creator 67 obtains the hazardous area 3 corresponding to motion of an obstacle included in the environment, based on the monitoring information.

With this configuration, the route 5 is generated in consideration of the hazardous areas 3 so that the route 5 that can avoid interference with dynamic obstacles can be generated. That is, in generating the route 5, behavior prediction and other processes are unnecessary in generating the route 5, and thus, calculation load and other loads, that is, a processing load, can be further reduced.

[3] In the map generator 100 of [1] or [2], the creator 67 obtains the hazardous area 3 corresponding to motion of a group of obstacles included in the environment based on the monitoring information.

With this configuration, obstacles are treated as one hazardous area 3 to generate the route 5. As a result, a calculation load in generating the route 5, that is, the processing load, for example, can be further reduced.

[4] In the map generator 100 of any one of [1] to [3], the creator 67 obtains an avoidance priority of the hazardous area 3 based on the monitoring information and adds the avoidance priority to the map 2.

With this configuration, in generating the route 5, priority can be set in the hazardous area 3 based on the avoidance priority. As a result, the route 5 can be flexibly generated with respect to weather to avoid the hazardous area 3, how far the mover 1 should be kept apart from the hazardous area 3, and others.

[5] In the map generator 100 of any one of [1] to [4], the creator 67 obtains an avoidance priority within the hazardous area 3 based on the monitoring information and adds the avoidance priority to the map 2.

With this configuration, different avoidance priorities can be given in the hazardous area 3. In this case, for one hazardous area 3, a portion that should be avoided with priority and a position that does not need to be avoided with priority can be determined based on the avoidance priority. This enables the hazardous area 3 to be appropriately reflected in generation of the route 5.

[6] In the map generator 100 of any one of [1] to [5], the creator 67 classifies the hazardous area 3 into a first hazardous area 31 corresponding to a static obstacle and a second hazardous area 32 corresponding to a dynamic obstacle. With this configuration, it is possible to know whether the hazardous area 3 changes with time or not. This enables the hazardous area 3 to be appropriately reflected in generation of the route 5. For example, since the first hazardous areas 31 do not change with time, the route 5 is also generated in consideration of the first hazardous areas 31 from a nearby first hazardous area 31 to a relatively distant first hazardous area 31. On the other hand, since the second hazardous areas 32 can change with time, the route 5 is generated in consideration only of a relatively nearby second hazardous area 32. By generating the route 5 appropriately using the first hazardous areas 31 and the second hazardous areas 32, the route 5 can appropriately avoid obstacles.

[7] In the map generator 100 of any one of [1] to [6], the creator 67 obtains information on motion of an obstacle serving as a basis of the hazardous area 3, that is, obstacle information 25, based on monitoring information, and adds the obstacle information 25 to the map 2.

With this configuration, autonomous driving is performed by using the obstacle information 25 as necessary. Even if a route 5 that avoid the hazardous area 3 is generated, an obstacle that needs to be avoided might appear during actual movement of the mover 1. The mover 1 can determine appearance of such an obstacle based on the obstacle information 25. If there is a possibility of collision, the mover 1 can also perform avoidance operation based on the obstacle information 25. That is, the map 2 includes the obstacle information 25 so that the mover 1 can respond more emergently to obstacles.

[8] In the map generator 100 of any one of [1] to [7], the creator 67 obtains information on disturbance of autonomous driving of the mover 1, that is, disturbance information 26, based on the monitoring information, and adds the disturbance information 26 to the map 2.

With this configuration, the route 5 can be generated in consideration of disturbance as well as the hazardous area 3. While the mover 1 is moving, the mover 1 can be affected by disturbance. Generation of the route 5 based on the map 2 enables generation of the route 5 in consideration of influence of disturbance.

[9] The map generator 100 of any one of [1] to [8], the creator 67 sets a monitoring priority at each position in the environment based on the monitoring information, and adds the monitoring priority to the map 2.

With this configuration, a point at which monitoring information is acquired in the environment can be determined based on the monitoring priority. That is, the use of the map 2 enables collection of monitoring information at necessary points.

[10] In the map generator 100 of [9], the creator 67 sets the monitoring priority in accordance with an elapsed time since the monitoring was acquired at each position in the environment.

With this configuration, a point at which monitoring information is acquired in the environment can be determined based on an elapsed time since the monitoring information was acquired. For example, monitoring information at a point with a long elapsed time since the monitoring information was acquired can be acquired with priority. Accordingly, the overall monitoring information in the environment can be kept as up-to-date as possible.

[11] A driving assistance system 1000 includes: a mover 1 that performs autonomous driving; and a map generator 100 that generates a map 2 for assisting autonomous driving of the mover 1, wherein the map generator 100 includes a collector 65 that collects monitoring information in an environment, and a creator 67 that generates the map 2 based on the monitoring information, the creator 67 obtains a hazardous area 3 that is included in the environment and to be avoided based on the monitoring information, generates the map 2 including geographical information 21 and the hazardous area 3, and transmits the map 2 to the mover 1, and the mover 1 generates a route 5 of autonomous driving based on the geographical information 21 and the hazardous area 3.

With this configuration, the mover 1 can easily generate the route 5 by using the map 2. That is, in generating the route 5, the mover 1 does not need to perform identification of an obstacle detected as the monitoring information, behavior prediction of the obstacle, and other processes. By treating the hazardous areas 3 as areas to be avoided when generating the route 5 based on the geographical information 21, the mover 1 can easily generate a route 5 that avoids interference with obstacles and other hazards in the environment. As a result, a calculation load of the mover 1 in generating the route 5, that is, the processing load, for example, can be reduced.

[12] In driving assistance system 1000 of [11], the creator 67 obtains an avoidance priority of the hazardous area 3 based on the monitoring information, and adds the avoidance priority to the map 2, and the mover 1 generates the route 5 based on the avoidance priority in addition to the geographical information 21 and the hazardous area 3.

With this configuration, in generating the route 5, the mover 1 does not treat all the hazardous areas 3 uniformly, but treats the hazardous areas 3 by priority based on the avoidance priority. For example, the mover 1 determines whether to avoid the hazardous area 3, how far the mover 1 should be kept apart from the hazardous area 3, and others, based on the avoidance priority to generate the route 5 flexibly reflecting the hazardous area 3.

[13] In the driving assistance system 1000 of [11] or [12], the creator 67 obtains an avoidance priority within the hazardous area 3 based on the monitoring information, adds the avoidance priority to the map 2, and the mover 1 generates the route 5 based on the avoidance priority in addition to the geographical information 21 and the hazardous area 3.

With this configuration, different avoidance priorities can be given in the hazardous area 3. In this case, for one hazardous area 3, the mover 1 can determine a portion that should be avoided with priority and a position that does not need to be avoided with priority can be determined based on the avoidance priority. As a result, the mover 1 can generate the route 5 flexibly reflecting the hazardous area 3.

[14] In the driving assistance system 1000 of any one of [11] to [13], the creator 67 classifies the hazardous area 3 into a first hazardous area 31 corresponding to a static obstacle and a second hazardous area 32 corresponding to a dynamic obstacle, and the mover 1 considers the second hazardous area 32 within a predetermined first range R1 from a current location and considers the first hazardous area 31 within the first range R1 and out of the first range R1 to generate the route 5.

With this configuration, the mover 1 can know whether the hazardous area 3 changes with time or not. Thus, the mover 1 can appropriately reflect the hazardous area 3 in generation of the route 5. Since the first hazardous areas 31 do not change with time, the route 5 is generated in consideration of the first hazardous areas 31 within and out of the first range R1. On the other hand, since the second hazardous areas 32 can change with time, the mover 1 generates the route 5 in consideration of only the second hazardous areas 32 within the first range R1. This is because if the second hazardous areas 32 ranging to the distant second hazardous area 32 are considered, when the mover 1 reaches the distant second hazardous area 32, this second hazardous area 32 might have already moved, and thus, consideration for route generation is useless. By classifying the hazardous areas 3 into the first hazardous areas 31 and the second hazardous areas 32, the mover 1 can generate the route 5 while appropriately reflecting necessary hazardous areas 3.

[15] The driving assistance system 1000 of any one of [11] to [14], the creator 67 obtains information on motion of an obstacle serving as a basis of the hazardous area 3, that is obstacle information 25, based on the monitoring information, and adds the obstacle information 25 to the map 2, and the mover 1 performs avoidance operation of avoiding collision with an obstacle, based on the obstacle information 25.

With this configuration, the mover 1 can utilize the obstacle information 25 as necessary in autonomous driving. Even if a route 5 that avoids the hazardous area 3 is generated, an obstacle that needs to be avoided might appear during actual movement of the mover 1. The mover 1 can determine appearance of such an obstacle based on the obstacle information 25. If there is a possibility of collision, the mover 1 can also perform avoidance operation based on the obstacle information 25. That is, the map 2 includes the obstacle information 25 so that the mover 1 can respond more emergently to obstacles.

[16] In the driving assistance system 1000 of any one of [11] to [15], the creator 67 obtains information on disturbance of autonomous driving of the mover 1, that is, disturbance information 26, based on the monitoring information, and adds the disturbance information 26 to the map 2, and the mover 1 generates the route 5 based on the disturbance information 26 in addition to the geographical information 21 and the hazardous areas 3.

With this configuration, the mover 1 can generate the route 5 in consideration of disturbance as well as the hazardous areas 3. While the mover 1 is moving, the mover 1 can be affected by disturbance. Generation of the route 5 based on the map 2 enables the mover 1 to generate the route 5 in consideration of influence of disturbance.

[17] The driving assistance system 1000 of any one of [11] to [16] further includes a monitor 8 that acquires the monitoring information in the environment and transmits the monitoring information to the map generator 100, wherein the creator 67 sets a monitoring priority at each position in the environment based on the monitoring information, adds the monitoring priority to the map 2, and transmits the map 2 to the monitor 8, and the monitor 8 determines an area for which the monitoring information in the environment is acquired, based on the monitoring priority.

With this configuration, the monitor 8 can determine a point for which monitoring information should be acquired in the environment, based on the monitoring priority. That is, with the use of the map 2, the map generator 100 can cause the monitor 8 to acquire the monitoring information at a necessary point.

[18] The driving assistance system 1000 of [17], the monitor 8 includes mobile monitors, that is, second monitors 8B, and each of the second monitors 8B determines an area for which the monitoring information in the environment is acquired, based on the monitoring priority and a position of each of other second monitors 8B.

With this configuration, the monitor 8 can determine a point at which the monitoring information should be acquired in the environment, based on an elapsed time since the monitoring information was acquired. For example, the monitor 8 acquires monitoring information at a point with a long-elapsed time since the monitoring information was acquired with priority. Accordingly, the map generator 100 can kept the overall monitoring information in the environment as up-to-date as possible.

Description of Reference Numerals

1000    driving assistance system

100    map generator
1    mover
2    map
21    geographical information
25    obstacle information (information on motion of obstacle)
26    disturbance information (information on disturbance)
3    hazardous area
31    first hazardous area
32    second hazardous area
5    route
65    collector
67    creator
8    monitor
8B    second monitor (mobile monitor)

**Claims**

1.  A map generator comprising:

    a collector that collects monitoring information in an environment; and
    a creator that generates a map for assisting autonomous driving of a mover based on the monitoring information, wherein
    the creator

    obtains a hazardous area that is included in the environment and to be avoided, based on the monitoring information, and
    generates the map including geographical information and the hazardous area.

2.  The map generator according to claim 1, wherein the creator obtains the hazardous area corresponding to motion of an obstacle included in the environment, based on the monitoring information.

3.  The map generator according to claim 2, wherein the creator obtains the hazardous area corresponding to motion of a group of obstacles included in the environment based on the monitoring information.

4.  The map generator according to claim 1, wherein the creator obtains an avoidance priority of the hazardous area based on the monitoring information and adds the avoidance priority to the map.

5.  The map generator according to claim 1, wherein the creator obtains an avoidance priority within the hazardous area based on the monitoring information and adds the avoidance priority to the map.

6.  The map generator according to claim 1, wherein the creator classifies the hazardous area into a first hazardous area corresponding to a static obstacle and a second hazardous area corresponding to a dynamic obstacle.

7.  The map generator according to claim 1, wherein the creator obtains information on motion of an obstacle serving as a basis of the hazardous area based on the monitoring information, and adds the information on the motion of the obstacle to the map.

8.  The map generator according to claim 1, wherein the creator obtains information on disturbance of autonomous driving of the mover based on the monitoring information, and adds the information on the disturbance to the map.

9.  The map generator according to claim 1, wherein the creator sets a monitoring priority at each position in the environment based on the monitoring information, and adds the monitoring priority to the map.

10. The map generator according to claim 9, wherein the creator sets the monitoring priority in accordance with an elapsed time since the monitoring information was acquired at each position in the environment.

11. A driving assistance system comprising:

    a mover that performs autonomous driving; and
    a map generator that generates a map for assisting autonomous driving of the mover, wherein
    the map generator includes a collector that collects monitoring information in an environment, and a creator that generates the map based on the monitoring information,
    the creator obtains a hazardous area that is included in the environment and to be avoided based on the monitoring information, generates the map including geographical information and the hazardous area, and transmits the map to the mover, and
    the mover generates a route of autonomous driving based on the geographical information and the hazardous area.

12. The driving assistance system according to claim 11, wherein

    the creator obtains an avoidance priority of the hazardous area based on the monitoring information, and adds the avoidance priority to the map, and
    the mover generates the route based on the avoidance priority in addition to the geographical information and the hazardous area.

13. The driving assistance system according to claim 11, wherein

the creator obtains an avoidance priority within the hazardous area based on the monitoring information, and adds the avoidance priority to the map, and
the mover generates the route based on the avoidance priority in addition to the geographical information and the hazardous area.

14. The driving assistance system according to claim 11, wherein

the creator classifies the hazardous area into a first hazardous area corresponding to a static obstacle and a second hazardous area corresponding to a dynamic obstacle, and
the mover considers the second hazardous area within a predetermined range from a current location and considers the first hazardous area within the range and out of the range to generate the route.

15. The driving assistance system according to claim 11, wherein

the creator obtains information on motion of an obstacle serving as a basis of the hazardous area based on the monitoring information, and adds the information on the motion of the obstacle to the map, and
the mover performs avoidance operation of avoiding collision with an obstacle, based on the information on the motion of the obstacle.

16. The driving assistance system according to claim 11, wherein

the creator obtains information on disturbance of autonomous driving of the mover based on the monitoring information, and adds the information on the disturbance to the map, and
the mover generates the route based on the information on the disturbance in addition to the geographical information and the hazardous area.

17. The driving assistance system according to claim 11, further comprising

a monitor that acquires the monitoring information in the environment and transmits the monitoring information to the map generator, wherein
the creator sets a monitoring priority at each position in the environment based on the monitoring information, adds the monitoring priority to the map, and transmits the map to the monitor, and
the monitor determines an area for which the monitoring information in the environment is acquired, based on the monitoring priority.

18. The driving assistance system according to claim 17, wherein

the monitor includes mobile monitors, and
each of the mobile monitors determines an area for which the monitoring information in the environment is acquired, based on the monitoring priority and a position of each of other mobile monitors.

FIG. 1

EP 4 560 603 A1

FIG. 2

FIG. 3

8A

81 — MONITORING SENSOR

82 — ACTUATOR

83 — COMMUNICATOR

85 — PROCESSOR

86 — STORAGE

87 — MEMORY

FIG. 4

85

88 — DETERMINER

89 — ACQUIRER

## FIG. 5

8B

91 — MONITORING SENSOR

92 — ACTUATOR

93 — COMMUNICATOR

94 — POSITION DETECTOR

95 — PROCESSOR

96 — STORAGE

97 — MEMORY

## FIG. 6

95

98 — DETERMINER

99 — ACQUIRER

FIG. 7

1

11 — MONITORING SENSOR

12 — ACTUATOR

13 — COMMUNICATOR

14 — POSITION DETECTOR

15 — PROCESSOR

16 — STORAGE

17 — MEMORY

111 — DISPLAY

FIG. 8

15

18 — ROUTE CREATOR

19 — DRIVING EXECUTOR

110 — MONITORING INFORMATION ACQUIRER

## FIG. 9

## FIG. 10

FIG. 11

21

FIG. 12

23

31a

31b

EP 4 560 603 A1

FIG. 13

FIG. 14

28

FIG. 15

26

FIG. 16

27

FIG. 17

FIG. 18

FIG. 19

```
        ┌──────────┐
        │  START   │
        └────┬─────┘
             │
             ▼
     ┌───────────────┐
     │ RECEIVE MAP   │────── S301
     └───────┬───────┘
             ▼
  ┌──────────────────────┐
  │ GENERATE ENTIRE ROUTE │───── S302
  └──────────┬───────────┘
             ▼
  ┌──────────────────────┐
  │ LOCALLY MODIFY ROUTE  │───── S303
  └──────────┬───────────┘
             ▼
     ┌───────────────┐
     │    MOVE       │────── S304
     └───────┬───────┘
             ▼
S305                              S306
   ◇ NEED AVOIDANCE ? ◇──YES──┐
             │ NO             ▼
             │      ┌──────────────────────┐
             │      │ AVOIDANCE OPERATION  │
             │      └──────────┬───────────┘
             ▼◄────────────────┘
S307
   NO ◇ REACH DESTINATION ? ◇
             │ YES
             ▼
        ┌──────────┐
        │   END    │
        └──────────┘
```

FIG. 20

FIG. 21

FIG. 22

## INTERNATIONAL SEARCH REPORT

| International application No. |
|---|
| **PCT/JP2022/028530** |

| A. | CLASSIFICATION OF SUBJECT MATTER |
|---|---|

*G08G 1/16*(2006.01)i; *G01C 21/34*(2006.01)i
FI:  G08G1/16 A; G01C21/34

According to International Patent Classification (IPC) or to both national classification and IPC

| B. | FIELDS SEARCHED |
|---|---|

Minimum documentation searched (classification system followed by classification symbols)

G08G1/16; G01C21/34

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 6956932 B1 (MITSUBISHI ELECTRIC CORPORATION) 02 November 2021 (2021-11-02)<br>paragraphs [0026], [0092]-[0101], fig. 17-18 | 1-18 |
| Y | WO 2011/129014 A1 (TOYOTA JIDOSHA KABUSHIKI KAISHA) 20 October 2011 (2011-10-20)<br>paragraphs [0018], [0027]-[0033], fig. 2-6 | 1-18 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 September 2022** | **11 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/028530**

| Patent document cited in search report | Publication date (day/month/year) | Patent family member(s) | Publication date (day/month/year) |
|---|---|---|---|
| JP 6956932 B1 | 02 November 2021 | (Family: none) | |
| WO 2011/129014 A1 | 20 October 2011 | US 2013/0033368 A1 paragraphs [0028], [0037]-[0043], fig. 2-6<br>EP 2560151 A1<br>CN 102844799 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019132988 A